Europäisches Patentamt

European Patent Office

Office européen des brevets

(19)

(11) **EP 1 249 891 B1**

(12) **EUROPEAN PATENT SPECIFICATION**

(45) Date of publication and mention
of the grant of the patent:
**15.06.2005 Bulletin 2005/24**

(51) Int Cl.⁷: **H01Q 3/26**

(21) Application number: **02007922.4**

(22) Date of filing: **09.04.2002**

(54) **Null direction control method for array antenna**

Verfahren zum Steuern der Nullrichtung von Gruppenantennen

Procédé de commande de la direction de rayonnement nul d'un réseau d'antennes

(84) Designated Contracting States:
**DE FR GB**

(30) Priority: **09.04.2001 JP 2001110539**

(43) Date of publication of application:
**16.10.2002 Bulletin 2002/42**

(73) Proprietor: **NEC CORPORATION**
**Tokyo (JP)**

(72) Inventor: **Hirabe, Masashi c/o NEC Corporation**
**Minato-ku, Tokyo (JP)**

(74) Representative: **Glawe, Delfs, Moll & Partner**
**Patentanwälte**
**Postfach 26 01 62**
**80058 München (DE)**

(56) References cited:
**US-A- 4 720 712**

• **OHMIYA M ET AL: "HOWELLS-APPLEBAUM ADAPTIVE SUPERRESOLUTION ARRAY FOR ACCELERATED SCANNING" IEEE TRANSACTIONS ON ANTENNAS AND PROPAGATION, IEEE INC. NEW YORK, US, vol. 36, no. 12, 1 December 1988 (1988-12-01), pages 1700-1706, XP000007859 ISSN: 0018-926X**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an array antenna system and in particular to a technique of calculating antenna weights for null direction control.

In base stations of a mobile communications system, signals received by respective antenna elements of an array antenna are subjected to adaptive signal processing to form nulls in incoming directions of interference waves, which allows the interference to be suppressed. In addition, the null pattern obtained from the received signals is also used for signal transmission.

In the case of asymmetric communication such as Web access using ADSL (asymmetric digital subscriber line) service, however, the null pattern obtained from the received signals is not always best suited for transmission. In this case, it is necessary to determine null directions in some way and form nulls in the determined directions.

Antenna weights forming nulls in desired directions can be obtained by using a Howells-Applebaum adaptive array control algorithm in a model which is formed when the antenna weights are calculated and receives a signal wave and interference waves at designated directions. Details of the Howells-Applebaum adaptive array control algorithm are discussed in, for example, Chapter 4 titled MSN adaptive array, pp. 67-86, "Adaptive Signal Processing by Array Antenna" by Nobuo Kikuma, SciTech Press.

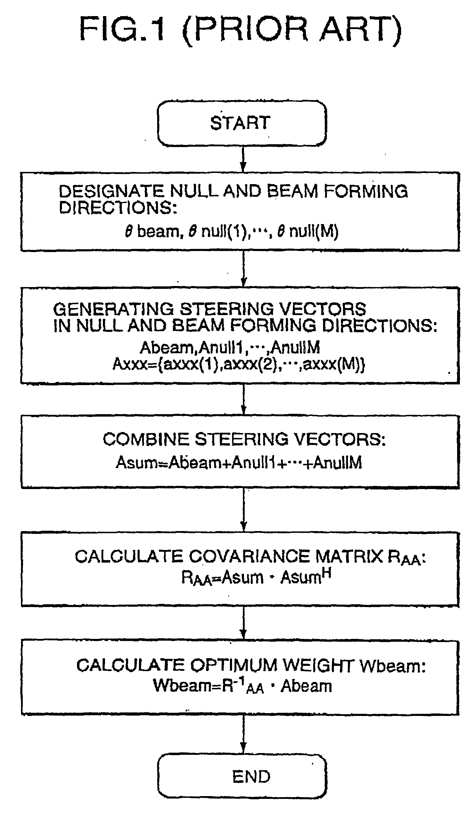

Fig. 1 is a flow chart showing a conventional null direction control method using the Howells-Applebaum adaptive array control algorithm. When null and beam forming directions, θ beam, θ null (1), ..., θ null(M), are designated, steering vectors, Abeam, Anull_1, ..., Anull_M, in the null and beam forming directions are generated and then are combined to produce Asum. The combined steering vectors Asum is used to calculate a covariance matrix $R_{AA}$. An inverse matrix of $R_{AA}$ is used to calculate the optimum weights, Wbeam, of the array antenna.

However, the optimum weight computation according to the above prior art needs the inverse matrix calculation. This causes processing time and amount of calculation to be increased, resulting in lowered processing speed and increased amount of hardware.

An object of the present invention is to provide a null direction control method which can obtain optimum antenna weights forming designated null beam directions without calculating an inverse matrix.

In an N-element array antenna, a designated null beam antenna pattern is obtained by processing a 2-element antenna weight vector forming a null in a sequentially selected one of M designated null directions and a (N-M)-element antenna weight vector forming a beam in a designated beam direction to produce an antenna weight vector for the N-element array antenna. The final antenna weight vector is calculated by incrementing the number of elements of a work antenna weight vector each time a null is formed in a sequentially selected one of the M designated null directions.

According to an aspect of the present invention, a method for producing an antenna weight vector for an N-element array antenna to form a designated antenna pattern having a single beam direction θ beam and M null directions θ null (1) - θ null (M) (1 =< M =< N-2), includes the steps of: a) producing a work antenna weight vector for a (N-M)-element array antenna to form a beam in the single beam direction; b) sequentially selecting one of the M null directions; c) producing a 2-element antenna weight vector for a 2-element array antenna to form a null in the selected null direction; d) multiplying the work antenna weight vector by a first weight and a second weight of the 2-element antenna weight vector to produce a first work weight vector and a second work antenna weight vector; e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and f) repeating the steps (c)-(e) until the M null directions have been selected, to produce a final work antenna weight vector as the antenna weight vector for an N-element array antenna.

The step (a) may include the step of calculating the work antenna weight vector $W_{pattern} = [w_{beam(1)}, ..., w_{beam(N-M)}]$ using the following expressions:

$$\delta\, w_{beam} = \exp\{-j \cdot k \cdot d \cdot \sin(\theta\ beam)\},$$

$$w_{beam(1)} = 1,$$

and

$$w_{beam(1)} = w_{beam(1 \cdot l)} \cdot \delta\, w_{beam}\ (i = 2, 3, ..., N\text{-}M),$$

where d is a distance between antenna elements of the N-element array antenna, k is propagation constant of free space (k = 2 π/λ), λ is wavelength in free space.

The step (c) may include the step of calculating the 2-element antenna weight vector $W_{null(m)} = [w_{null\_1(m)}, w_{null\ 2(m)}]$ using the following expressions:

$$\delta\ w_{null(m)} = -\exp\{-j\cdot k\cdot d\cdot \sin(\theta null(m))\},$$

$$w_{null\ 1(m)} = 1,$$

and

$$w_{null\_2(m)} = w_{null\_1(m)} \cdot \delta\ w_{null(m)}$$

$$= -\exp\{-j\cdot k\cdot d\cdot \sin(\theta null(m))\},$$

where m = 1, 2, ...,M.

The step (d) may include the step of calculating the first work weight vector $W_{beam1}$ and the second work antenna weight vector $W_{beam2}$ using the following expressions:

$$W_{beam1} = w_{null\ 1(m)} \cdot W_{pattern} = 1 \cdot W_{pattern,}$$

and

$$W_{beam2} = w_{null\_2(m)} \cdot W_{pattern}$$

$$= \exp\{-j\cdot k\cdot d\cdot \cos(\theta null(m))\}\cdot W_{pattern}.$$

The step (e) may include the stops of: appending 0 to the trail end of the first work weight vector $W_{beam1}$ and to the head of the second work weight vector $W_{beam2}$ to produce the first expanded weight vector $[W_{beam1}, 0]$ and the second expanded weight vector $[0, W_{beam2}]$; and adding the first expanded weight vector and the second expanded weight vector to produce the work antenna weight vector $W_{pattern} = [W_{beam1}, 0] + [0, W_{beam2}]$.

According to another aspect of the present invention, a method for producing an antenna weight vector for an N-element array antenna to form a designated antenna pattern having M null directions θ null(1)-θ null (M) (1 =< M =<N-1), includes the steps of: a) arbitrarily preparing a work antenna weight vector for a (N-M)-element array antenna; b) sequentially selecting one of the M null directions; c) producing a 2-element antenna weight vector for a 2-element array antenna to form a null in the selected null direction; d) multiplying the work antenna weight vector by a first weight and a second weight of the 2-element antenna weight vector to produce a first work weight vector and a second work antenna weight vector; e) appending 0 to a trail end of the first work weight vector and" to a head of the second work weight vector to produce a first expanded weight vector and a second expanded weight vector, and adding the first expanded weight vector and the second expanded weight vector to produce a work antenna weight vector; and f) repeating the steps (c)-(e) until the M null directions have been selected, to produce a final work antenna weight vector as the antenna weight vector for an N-element array antenna.

FIG. 1 is a flow chart showing a conventional null direction control method using the Howells-Applebaum adaptive array control algorithm;

FIG. 2 is a block diagram showing a transmission digital beam forming apparatus employing a null direction control method according to the present invention;

FIG. 3 is a flow chart showing a null direction control method according to a first embodiment of the present invention;

FIG. 4 is a schematic diagram showing a flow of generating a single beam and three nulls in the case where the null direction control method according to the first embodiment is applied to a 6-element array antenna;

FIG. 5A is a graph showing an antenna pattern in the stage of 3-element array antenna as shown in Fig. 4(a);

FIG. 5B is a graph showing an antenna pattern in the stage of 4-element array antenna as shown in Fig. 4(b);

FIG. 5C is a graph showing an antenna pattern in the stage of 5-element array antenna as shown in Fig. 4(c);

FIG. 5D is a graph showing an antenna pattern in the stage of 6-element array antenna as shown in Fig. 4(d);

FIG. 6 is a flow chart showing a null direction control method according to a second embodiment of the present invention; and

FIG. 7 is a block diagram showing a reception digital beam forming apparatus employing a null direction control method according to the present invention;

Hereinafter, embodiments of the present invention will be described in detail by referring to the drawings.

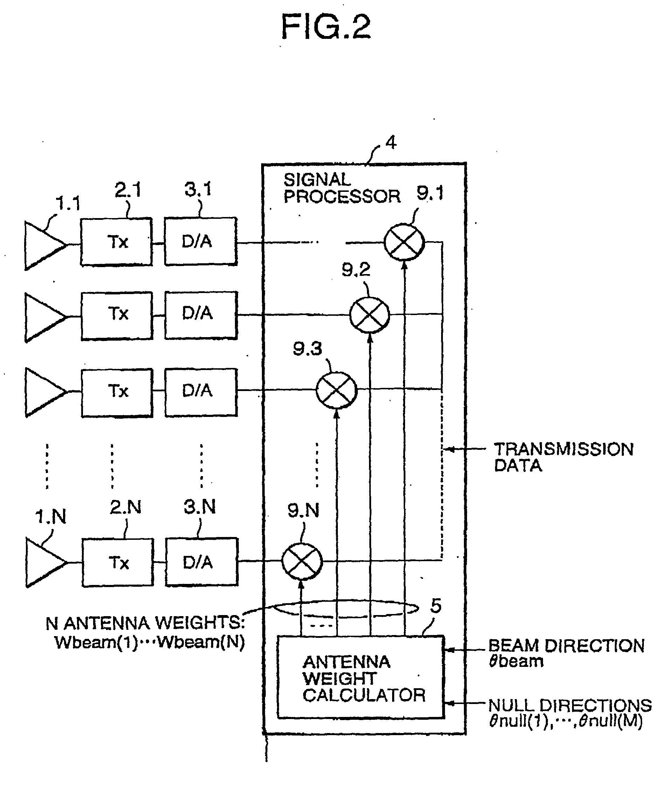

Referring to Fig. 2, an array antenna is composed of N antenna elements 1.1 - 1.N, which are spaced uniformly and aligned in a line. The respective antenna elements 1.1 - 1.N are connected to N transmitters 2.1 - 2.N, which are in turn connected to a signal processor 4 through N digital-to-analog (D/A) converters 3.1 - 3.N.

The signal processor 4 includes N multipliers 9.1 - 9.N and an antenna weight calculator 5. The multipliers 9.1 - 9.N are connected to the D/A converters 3.1 - 3.N and assign antenna weights $w_{bean(1)}$ - $w_{beam(N)}$ to transmission data, respectively. The antenna weights $w_{bean(1)}$ - $w_{beam(N)}$ are calculated from designated beam direction θ beam and null directions θ null (1) , ..., θ null (M) by the antenna weight calculator 5.

The signal processor 4 including the multipliers 9.1 - 9. N and the antenna weight calculator 5 is implemented by a digital signal processor on which an antenna weight calculation program is running, which will be described later.

In the above circuit, when the transmission data enters the signal processor 4, the multipliers 9.1 - 9.N multiply the transmission data by respective ones of the antenna weights $w_{bean(1)}$ - $w_{beam(N)}$ generated by the antenna weight calculator 5. In this way, N weighted streams of transmission data are converted from digital to analog by the D/A converters 3.1 - 3.N, respectively. The respective analog transmission signals are transmitted by the transmitters 2.1 - 2.N through the antenna elements 1.1 - 1.N.

Antenna weight calculation (1)

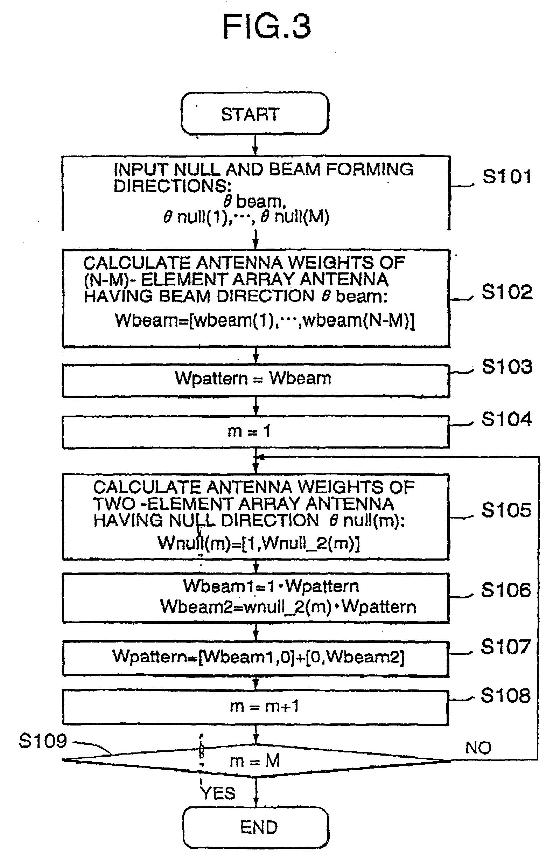

Referring to Fig. 3, a beam forming direction θbeam and null forming directions θ null(1),..., θ null (M) are inputted to the antenna weight calculator 5 (step S101). Here, M is the number of nulls whose directions are designated and M is restricted to N-2 or less.

When inputting these directions, the antenna weight calculator 5 calculates an antenna weight vector $W_{beam}$ to be assigned to a (N-M) -element array antenna having the beam forming direction θ beam using the following expressions (1)-(4):

$$W_{beam} = [w_{beam(1)}, ..., w_{beam(N-M)}] \tag{1},$$

$$\delta w_{beam} = \exp\{-j \cdot k \cdot d \cdot \sin(\theta\ beam)\} \tag{2},$$

$$w_{beam(1)} = 1 \tag{3},$$

and

$$w_{beam(i)} = w_{beam(i-1)} \cdot \delta w_{beam} : i = 2, 3, ..., N\text{-}M \tag{4},$$

where d is a distance between antenna elements, k is propagation constant of free space ($k = 2\pi/\lambda$), $\lambda$ is wavelength in free space (step S102). Thereafter,

$$W_{pattern} = W_{beam} \qquad (5)$$

and m = 1 (steps S103, S104) and the following steps S105 - S109 are repeatedly performed until m = M, where m = 1, 2, ..., M.

Step S105:

An antenna weight $W_{null(m)}$ for a 2-element array antenna forming null in the direction θ null (m) is calculated by the following expressions (6) - (9):

$$W_{null(m)} = [w_{null\_1(m)}, w_{null\_2(m)}] \qquad (6),$$

$$\delta w_{null(m)} = -\exp\{-j \cdot k \cdot d \cdot \sin(\theta null(m))\} \qquad (7),$$

$$w_{null\_1(m)} = 1 \qquad (8),$$

and

$$w_{null\_2(m)} = w_{null\_1(m)} \cdot \delta w_{null(m)}$$

$$= -\exp\{j \cdot k \cdot d \cdot \sin(\theta null(m))\} \qquad (9).$$

Step S106:

Using $W_{pattern}$ and $W_{null(m)}$, two antenna weight vectors $W_{beam1}$ and $W_{beam2}$ for a (N-M)-element array antenna are calculated by the following expressions (10) and (11):

$$W_{beam1} - w_{null\_1(m)} \cdot W_{pattern} = 1 \cdot W_{pattern} \qquad (10);$$

and

$$W_{beam2} = w_{null\ 2(m)} \cdot W_{pattern}$$

$$= \exp\{-j \cdot k \cdot d \cdot \cos(\theta\ null\ (m))\} \cdot W_{pattern} \qquad (11).$$

Step S107:

Appending 0 to the trail end of $W_{beam1}$ and to the head of $W_{beam2}$, antenna weight vectors for the (N-M+1)-element array antenna are calculated and added to produce $W_{pattern}$ using the following expression:

$$W_{pattern} = [W_{beam1}, 0] + [0, W_{beam2}] \qquad (12).$$

Thereafter, m is incremented (step S108) and it is determined whether m = M (step S109). If m does not reach M (NO in step S109), control goes back to the step S105 and the steps S105-S108 are repeated until m = M.

In this manner, a final antenna weight vector $W_{pattern} = [w_{beam(1)}, ... , w_{beam(N)}]$ is obtained and these antenna weights are output to respective ones of the multipliers 9.1 - 9.N. In other words, each of the beam and null directions is designated by a single complex weight and these complex weights are only multiplied and added to produce a final antenna pattern having the designated beam direction θ beam and null directions θ null (1), ..., θ null (M), resulting in decreased amount of computation.

Example

As an example, the case of N=6 and M=3 will be described below. In this example, a single beam direction θ beam and three null directions θ null(1), θ null(2) and θ null(3) are designated in a 6-element array antenna system.

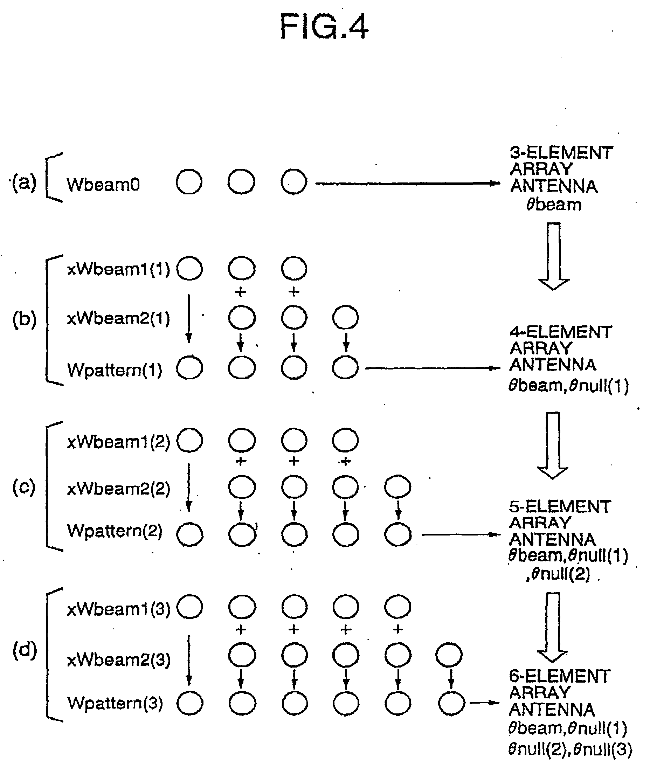

Since N - M = 3, as shown in Fig. 4(a), an antenna weight vector $W_{beam0}$ of a 3-element array antenna having the beam direction θ beam is first calculated by the expressions (1)-(4).

Subaequently, the expressions (6)-(9) are first used to calculate an antenna weight vector $W_{null(1)}$ of a 2-element array antenna forming null in the direction θ null (1). Using this $W_{null(1)}$ and the above $W_{beam0}$, two antenna weight vectors $W_{beam1(1)}$ and $W_{beam2(1)}$ for the 3-element array antenna are calculated according to the expressions (10) and (11). By appending 0 to the trail end of $W_{beam1(1)}$ and to the head of $W_{beam2(1)}$, two antenna weight vectors for a 4-element array antenna are calculated and added to produce $W_{pattern(1)}$ using the expression (12) as shown in Fig. 4(b).

Similarly, the expressions (6)-(9) are used to calculate an antenna weight vector $W_{null(2)}$ of a 2-element array antenna forming null in the direction θ null (2). Using this $W_{null(2)}$ and the above $W_{pattern(1)}$, two antenna weight vectors $W_{beam1(2)}$ and $W_{beam2(2)}$ for the 4-element array antenna are calculated according to the expressions (10) and (11). By appending 0 to the trail end of $W_{beam1(2)}$ and to the head of $W_{beam2(2)}$, two antenna weight vectors for a 5-element array antenna are calculated and added to produce $W_{pattern(2)}$ using the expression (12) as shown in Fig. 4(c).

Since m does not reach M=3, the expressions (6)-(9) are similarly used to calculate an antenna weight vector $W_{null(3)}$ of a 2-element array antenna forming null in the direction θ null (3). Using this $W_{null(3)}$ and the above $W_{pattern(2)}$, two antenna weight vectors $W_{beam1(3)}$ and $W_{beam2(3)}$ for the 5-element array antenna are calculated according to the expressions (10) and (11). By appending 0 to the trail end of $W_{beam1(3)}$ and to the head of $W_{beam2(3)}$, two antenna weight vectors for a 6-element array antenna are calculated and added to produce $W_{pattern(3)}$ using the expression (12) as shown in Fig. 4(d).

In this manner, the final antenna weight vector $W_{pattern(3)} = [w_{bean(1)}, ... , w_{beam(6)}]$ is obtained and these antenna weights $w_{bean(1)}, ... , w_{beam(6)}$ are output to respective ones of the multipliers 9.1 - 9.6 and thereby amplitude and phase of transmission data are controlled. Accordingly, a single beam having the designated beam direction θ beam and three nulls having the directions θ null(1), θnull(2) and θnull(3) can be obtained without inverse-matrix calculation. In this example, three complex weights $W_{null(1)}$, $W_{null(2)}$, $W_{null(3)}$ are used to designate the respective null directions.

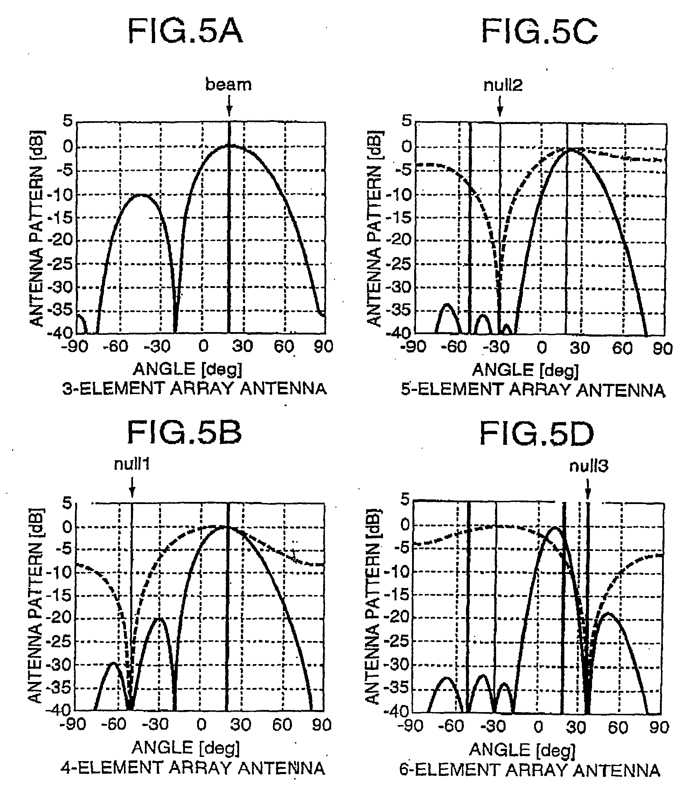

Figs. 5A-5D show antenna patterns corresponding to the respective stages of 3-element, 4-element, 5-element, and 6-element array antennas as shown in Fig. 4 (a), 4 (b), 4(c), and 4(d). In Figs. 5A-5D, dashed lines denote an antenna pattern corresponding to the expression (6) and solid lines denote an antenna pattern corresponding to the expressions (5) and (12).

In this manner, a final complex antenna weight $W_{pattern} = [w_{bean(1)}, ... ,w_{beam(6)}]$ is obtained and these antenna weights are output to respective ones of the multipliers 9.1 - 9.6. In other words, each of the beam and null directions is designated by a single complex weight and these complex weights are only multiplied and added to produce a final antenna pattern having the designated beam direction θ beam and null directions θ null(1), θ null (2) and θ null (3). Accordingly, there is no need of inverse-matrix computation, resulting in decreased amount of calculation.

Antenna weight calculation (2)

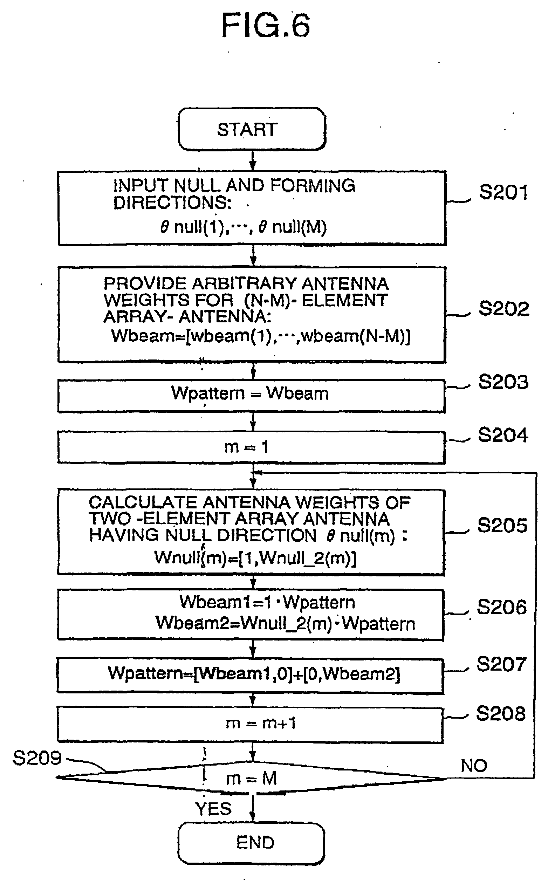

A second embodiment of the present invention will be described with reference to Fig. 6. In the second embodiment, only null directions θ null(1),..., θ null(M) are designated to produce antenna weights forming a designated null direction.

Referring to Fig. 6, the null forming directions θ null(1), ..., θ null(M) are inputted to the antenna weight calculator 5 (step S201). Here, M is the number of nulls whose directions are designated and M is restricted to N-1 or less.

Thereafter, an arbitrary antenna weight vector $W_{beam}$ to be assigned to a (N-M)-element array antenna as represented by the following expression (13):

$$W_{beam} = [w_{beam(1)}, ..., w_{beam(N-M)}] \tag{13}$$

(step S202). Thereafter, $W_{pattern} = W_{beam}$ and m = 1 (steps S203, S204) and the following steps S205 - S209 are repeatedly performed until m = M, where m = 1, 2, ..., M.

Step S205:

An antenna weight $W_{null(m)}$ for a 2-element array antenna forming null in the direction θ null (m) is calculated by the following expressions (14) - (17):

$$W_{null(m)} = [w_{null\ 1(m)}, w_{null\ 2(m)}] \qquad (14),$$

$$\delta\ w_{null(m)} - exp\{-j \cdot k \cdot d \cdot cos(\theta null(m))\} \qquad (15),$$

$$w_{null\_1(m)} = 1\ (16), \qquad (16),$$

and

$$w_{null\_2(m)} = w_{null\_1(m)} \cdot \delta\ w_{null(m)}$$

$$= exp\{-j \cdot k \cdot d \cdot cos(\theta null(m))\} \qquad (17).$$

Step S206:

Using $W_{pattern}$ and $W_{null(m)}$, two antenna weight vectors $W_{beam1}$ and $W_{beam2}$ for a (N-M)-element array antenna are calculated by the following expressions (18) and (19):

$$W_{beam1} = w_{null\_1(m)} \cdot W_{pattern} = 1 \cdot W_{pattern} \qquad (18);$$

and

$$W_{beam2} = w_{null\ 2(m)} \cdot W_{pattern}$$

$$= exp\{-j \cdot k \cdot d \cdot cos(\theta null(m))\} \cdot W_{pattern} \qquad (19).$$

Step S207:

Appending 0 to the trail end of $W_{beam1}$ and to the head of $W_{beam2}$, antenna weight vectors for the (N-M+1)-element array antenna are calculated and added to produce $W_{pattern}$ using the following expression:

$$W_{pattern} = [W_{beam1}, 0] + [0, W_{beam2}] \qquad (20).$$

Thereafter, m is incremented (step S208) and it is determined whether m = M (step S209). If m does not reach M (NO in step S209), control goes back to the step S205 and the steps S205-S208 are repeated until m = M.

In this manner, a final antenna weight vector $W_{pattern} = [w_{bean(1)}, \ldots, w_{beam(N)}]$ is obtained and these antenna weights are output to respective ones of the multipliers 9.1 - 9.N. In other words, each of the beam and null directions is designated by a single complex weight and these complex weights are only multiplied and added to produce a final antenna pattern having the designated null directions θ null (1), ..., θ null(M), resulting in decreased amount of computation.

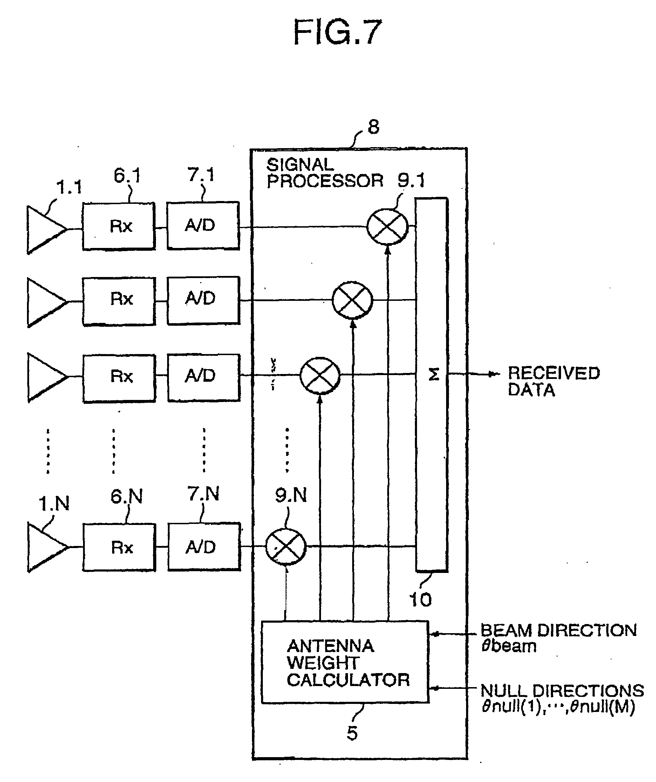

Referring to Fig. 7, an array antenna is composed of N antenna elements 1.1 - 1.N, which are spaced uniformly and aligned in a line. The respective antenna elements 1.1 - 1.N are connected to N receivers 6.1 - 6.N, which are in turn connected to a signal processor 8 through N analog-to-digital (A/D) converters 7.1 - 7.N.

The signal processor 8 includes N multipliers 9.1 - 9.N, an antenna weight calculator 5, and a combiner 10. The multipliers 9.1 - 9.N connects the A/D converters 7.1 - 7.N and the combiner 10 and assign antenna weights $w_{bean(1)}$ - $w_{beam(N)}$ to respective ones of received data streams, respectively. The antenna weights $w_{bean(1)}$ - $w_{beam(N)}$

are calculated from designated beam direction θ beam and null directions θ null(1),...,θ null (M) by the antenna weight calculator 5. The antenna weight calculation method is the same as that of of the first embodiment and therefore the details are omitted.

The signal processor 8 including the multipliers 9.1 - 9. N and the antenna weight calculator 5 is implemented by a digital signal processor on which the antenna weight calculation program is running.

In the above circuit, N received signals by the N receivers 6.1 - 6.N through the N antenna elements 1.1 - 1.N are converted from analog to digital by the N A/D converters 7.1 - 7.N, respectively. The respective received data streams are weighed by the multipliers 9.1 - 9.N according to the antenna weights $w_{bean(1)}$ - $w_{beam(N)}$. The weighted received data streams are combined by the combiner 10 to produce received data.

As described above, according to the present invention, antenna weights forming a designated beam null direction pattern can be obtained without the need of calculating an inverse matrix, resulting in dramatically reduced amount of computation.

**Claims**

1. A method for producing an antenna weight vector for an N-element array antenna to form a designated antenna pattern having a single beam direction θ beam and M null directions θ null(1)-θ null(M) (1 =< M =< N-2), **characterized by** the steps of:

   a) producing a work antenna weight vector for a (N-M)-element array antenna to form a beam in the single beam direction;
   b) sequentially selecting one of the M null directions;
   c) producing a 2-element antenna weight vector for a 2-element array antenna to form a null in the selected null direction;
   d) multiplying the work antenna weight vector by a first weight and a second weight of the 2-element antenna weight vector to produce a first work weight vector and a second work antenna weight vector;
   e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and
   f) repeating the steps (c)-(e) until the M null directions have been selected, to produce a final work antenna weight vector as the antenna weight vector for an N-element array antenna.

2. The method according to claim 1, wherein the step (a) comprises the step of calculating the work antenna weight vector $W_{pattern} = [w_{beam(1)}, ..., w_{beam(N-M)}]$ using the following expressions:

$$\delta\, w_{beam} = \exp\{-j \cdot k \cdot d \cdot \sin(\theta beam)\},$$

$$w_{beam(1)} = 1,$$

and

$$w_{beam(i)} = w_{beam(i-1)} \cdot \delta w_{beam} \ (i = 2, 3, ..., N-M),$$

   where d is a distance between antenna elements of the N-element array antenna, k is propagation constant of free space (k = 2 π/λ), λ is wavelength in free space.

3. The method according to claim 2, wherein the step (c) comprises the step of calculating the 2-element antenna weight vector $W_{null(m)} = [w_{null\_1(m)}, w_{null\_2(m)}]$ using the following expressions:

$$\delta w_{null(m)} = -\exp\{-j \cdot k \cdot d \cdot \sin(\theta\, null(m))\},$$

$$w_{null\_1(m)} = 1,$$

and

$$w_{null\_2(m)} = w_{null\_1(m)} \cdot \delta\, w_{null(m)}$$

$$= -exp\{-j \cdot k \cdot d \cdot sin(\theta null(m))\},$$

where m = 1, 2, ...,M.

**4.** The method according to claim 3, wherein the step (d) comprises the step of calculating the first work weight vector $W_{beam1}$ and the second work antenna weight vector $W_{beam2}$ using the following expressions:

$$W_{beam1} = w_{null\_1(m)} \cdot W_{pattern} = 1 \cdot W_{pattern},$$

and

$$W_{beam2} = w_{null\_2(m)} \cdot W_{pattern}$$

$$= exp\{-j \cdot k \cdot d \cdot cos\,(\theta\ null\,(m))\} \cdot W_{pattern}.$$

**5.** The method according to claim 4, wherein the step (e) comprises the steps of:

appending 0 to the trail end of the first work weight vector $W_{beam1}$ and to the head of the second work weight vector $W_{beam2}$ to produce the first expanded weight vector [$W_{beam1}$, 0] and the second expanded weight vector [0, $W_{beam2}$]; and
adding the first expanded weight vector and the second expanded weight vector to produce the work antenna weight vector $W_{pattern}$ = [$W_{beam1}$, 0] + [0, $W_{beam2}$].

**6.** A method for producing an antenna weight vector for an N-element array antenna to form a designated antenna pattern having M null directions θ null (1) - θ null (M) (1 =< M =< N-1), **characterized by** the steps of:

a) arbitrarily preparing a work antenna weight vector for a (N-M)-element array antenna;
b) sequentially selecting one of the M null directions;
c) producing a 2-element antenna weight vector for a 2-element array antenna to form a null in the selected null direction;
d) multiplying the work antenna weight vector by a first weight and a second weight of the 2-element antenna weight vector to produce a first work weight vector and a second work antenna weight vector;
e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and
f) repeating the steps (c)-(e) until the M null directions have been selected, to produce a final work antenna weight vector as the antenna weight vector for an N-element array antenna.

**7.** A program for instructing a computer to produce an antenna weight vector for an N-element array antenna to form a designated antenna pattern having a single beam direction θ beam and M null directions θnull(1)-θnull(M) (1 =< M =< N-2), the program implementing the method defined in claim 1.

**8.** A program for instructing a computer to produce an antenna weight vector for an N-element array antenna to form a designated antenna pattern having M null directions θ null (1)-θ null(M) (1 =< M =< N-1), the program implementing the method defined in claim 6.

**9.** An apparatus for forming a designated antenna pattern, comprising:

an N-element array antenna having N antenna elements spaced uniformly and aligned in a line;
N transmitters connected to respective ones of the N antenna elements;
N digital-to-analog converters, each of which converts a corresponding stream of transmission data into an analog signal that is output to a corresponding transmitter; and

a signal processor for processing the transmission data to produce N streams of transmission data which are weighted according to N antenna weights, respectively,

**characterized in that** the signal processor inputs a single beam direction beam and M null directions θ null (1)-θ null (M) (1 =< M =< N-2) and performs the steps of:

a) producing a work antenna weight vector for a (N-M)-element array antenna to form a beam in the single beam direction;

b) sequentially selecting one of the M null directions;

c) producing a 2-element antenna weight vector for a 2-element array antenna to form a null in the selected null direction;

d) multiplying the work antenna weight vector by a first weight and a second weight of the 2-element antenna weight vector to produce a first work weight vector and a second work antenna weight vector;

e) appending 0 to a trail end ot the first work weight vector and to a head of the second work weight vector to produce a first expanded weight vector and a second expanded weight vector, and adding the first expanded weight vector and the second expanded weight vector to produce a work antenna weight vector; and

f) repeating the steps (c)-(e) until the M null directions have been selected, to produce a final work antenna weight vector as the antenna weight vector for an N-element array antenna.

**10.** An apparatus for forming a designated antenna pattern, comprising:

an N-element array antenna having N antenna elements spaced uniformly and aligned in a line;

N transmitters connected to respective ones of the N antenna elements;

N digital-to-analog converters, each of which converts a corresponding stream of transmission data into an analog signal that is output to a corresponding transmitter; and

a signal processor for processing the transmission data to produce N streams of transmission data which are weighted according to N antenna weights, respectively,

**characterized in that** the signal processor inputs M null directions θ null (1) ~ θ null (M) (1 =< M =< N-1), comprising the steps of:

a) arbitrarily preparing a work antenna weight vector for a (N-M)-element array antenna;

b) sequentially selecting one of the M null directions;

c) producing a 2-element antenna weight vector for a 2-element array antenna to form a null in the selected null direction;

d) multiplying the work antenna weight vector by a first weight and a second weight of the 2-element antenna weight vector to produce a first work weight vector and a second work antenna weight vector;

e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and

f) repeating the steps (c)-(e) until the M null directions have been selected, to produce a final work antenna weight vector as the antenna weight vector for an N-element array antenna.

**11.** An apparatus for forming a designated antenna pattern, comprising:

an N-element array antenna having N antenna elements spaced uniformly and aligned in a line;

N receivers connected to respective ones of the N antenna elements, each of which produces a corresponding received signal;

N analog-to-digital converters, each of which converts a corresponding received signal to a stream of received data; and

a signal processor for weighing N streams of received data according to respective ones of N antenna weights to produce received data,

**characterized in that** the signal processor inputs a single beam direction θ beam and M null directions θ null(1)-θ null(M) (1 =< M =< N-2) and performs the steps of:

a) producing a work antenna weight vector for a (N-M)-element array antenna to form a beam in the single beam direction;

b) sequentially selecting one of the M null directions;

c) producing a 2-element antenna weight vector for a 2-element array antenna to form a null in the selected null direction;

d) multiplying the work antenna weight vector by a first weight and a second weight of the 2-element antenna weight vector to produce a first work weight vector and a second work antenna weight vector;

e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and

f) repeating the steps (c)-(e) until the M null directions have been selected, to produce a final work antenna weight vector as the antenna weight vector for an N-element array antenna.

**12.** An apparatus for forming a designated antenna pattern, comprising:

an N-element array antenna having N antenna elements spaced uniformly and aligned in a line;

N receivers connected to respective ones of the N antenna elements, each of which produces a corresponding received signal;

N analog-to-digital converters, each of which converts a corresponding received signal to a stream of received data; and

a signal processor for weighing N streams of received data according to respective ones of N antenna weights to produce received data,

**characterized in that** the signal processor inputs M null directions θ null (1) - θ null (M) (1 =<M =< N-1), comprising the steps of:

a) arbitrarily preparing a work antenna weight vector for a (N-M)-element array antenna;

b) sequentially selecting one of the M null directions;

c) producing a 2-element antenna weight vector for a 2-element array antenna to form a null in the selected null direction;

d) multiplying the work antenna weight vector by a first weight and a second weight of the 2-element antenna weight vector to produce a first work weight vector and a second work antenna weight vector;

e) appending 0 to a trail end of the first work weight vector and to a head of the second work weight vector to produce a first expanded weight vector and a second expanded weight vector, and adding the first expanded weight vector and the second expanded weight vector to produce a work antenna weight vector; and

f) repeating the steps (c) - (e) until the M null directions have been selected, to produce a final work antenna weight vector as the antenna weight vector for an N-element array antenna.

**Patentansprüche**

**1.** Verfahren zur Erzeugung eines Antennenwichtungsvektors für eine N-Element-Antennenanordnung, um ein gewünschtes Antennenmuster zu bilden, das einen Einzel-Strahlrichtung-θ-Strahl und M Nullrichtungen θ Null (1) - θ Null (M) mit (1 = < M = < N-2) aufweist, **gekennzeichnet durch** die Schritte:

a) Erzeugen eines Arbeitsantennenwichtungsvektors für eine (N-M)-Element-Antennenanordnung, um einen Strahl in die einzelne Strahlrichtung zu bilden,

b) Aufeinanderfolgendes Auswählen einer der M Nullrichtungen,

c) Erzeugen eines 2-Element-Antennenwichtungsvektors für eine 2-Element-Antennenanordnung, um eine Null in der ausgewählten Nullrichtung zu bilden,

d) Multiplizieren des Arbeitsantennenwichtungsvektors mit einem ersten Gewicht und einem zweiten Gewicht des 2-Element Antennenwichtungsvektors, um einen ersten Arbeitswichtungsvektor und einen zweiten Arbeitswichtungsvektor zu erzeugen,

e) 0 anfügen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und

f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung herzustellen.

2. Verfahren nach Anspruch 1, wobei der Schritt (a) den Schritt des Berechnens des Arbeitsantennenwichtungsvektors $W_{Muster} = [w_{Strahl\ (1)}, ..., w_{Strahl\ (N-M)}]$ mit den folgenden Ausdrücken umfasst:

$$\delta\ w_{Strahl} = exp\ \{-j \cdot k \cdot d \cdot sin\ (\theta\ Strahl\},$$

$$w_{Strahl\ (1)} = 1,$$

und

$$w_{Strahl\ (i)} = w_{Strahl\ (i-1)} \cdot \delta w_{Strahl}\ (i = 2, 3, ..., N-M),$$

wobei d ein Abstand zwischen den Antennenelementen der N-Element-Antennenanordnung, k eine Ausbreitungskonstante im freien Raum (k = $2\ \pi/\lambda$), und $\lambda$ eine Wellenlänge im freien Raum ist.

3. Verfahren nach Anspruch 2, wobei der Schritt (c) Schritt des Berechnens des 2-Element-Antennenwichtungsvektors $W_{Null(m)} = [w_{null\_1(m)}, w_{Null\_2(m)}]$ mit den folgenden Ausdrücken umfasst:

$$\delta\ w_{Null(m)} = - exp\ \{-j \cdot k \cdot d \cdot sin\ (\theta\ Null\ (m))\},$$

$$w_{Null\_1\ (m)} = 1,$$

und

$$w_{Null\_2\ (m)} = w_{Null\_1\ (m)} \cdot \delta w_{Null(m)}$$

$$= - exp\ \{- j \cdot k \cdot d \cdot sin\ (\theta\ Null\ (m))\},$$

wobei m = 1, 2, ..., M ist.

4. Verfahren nach Anspruch 3, wobei der Schritt (d) den Schritt des Berechnens des ersten Arbeitswichtungsvektors $W_{Strahl\ 1}$ und des zweiten Arbeitswichtungsvektors $W_{Strahl\ 2}$ mit den folgenden Ausdrücken umfasst:

$$W_{Strahl\ 1} = w_{Null\_1(m)} \cdot W_{Muster} = 1 \cdot W_{Muster},$$

und

$$W_{Strahl\ 2} = W_{Null\_2(m)} \cdot W_{Muster}$$

$$= exp\ \{-j \cdot k \cdot d \cdot cos\ (\theta\ Null\ (m))\} \cdot W_{Muster}$$

5. Verfahren nach Anspruch 4, wobei der Schritt (e) die Schritte umfasst:

0 Anfügen an das Ende des ersten Arbeitswichtungsvektors $W_{Strahl\ 1}$ und an den Anfang des zweiten Arbeitswichtungsvektors $W_{Strahl\ 2}$, um den ersten erweiterten Wichtungsvektor $[W_{Strahl\ 1}, 0]$ und den zweiten erweiterten Wichtungsvektor $[0, W_{Strahl\ 2}]$ zu erzeugen, und
Addieren des ersten erweiterten Wichtungsvektors und des zweiten erweiterten Wichtungsvektors, um den Arbeitsantennenwichtungsvektor $W_{Muster} = [W_{Strahl\ 1}, 0] + [0, W_{Strahl\ 2}]$ zu erzeugen.

**6.** Verfahren zur Herstellung eines Antennenwichtungsvektors für eine N-Element-Antennenanordnung, um ein gewünschtes Antennenmuster zu bilden, das M Nullrichtungen θ Null (1) - θ Null (M) mit (1 = < M = < N-1) aufweist, **gekennzeichnet durch** die Schritte:

a) wahlweise Vorbereiten eines Arbeitsantennenwichtungsvektors für eine (N-M)-Element-Antennenanordnung,

b) Aufeinanderfolgendes Auswählen einer der M Nullrichtungen,

c) Erzeugen eines 2-Element-Antennenwichtungsvektors für eine 2-Element-Antennenanordnung, um eine Null in der ausgewählten Nullrichtung zu bilden,

d) Multiplizieren des Arbeitsantennenwichtungsvektors mit einem ersten Gewicht und einem zweiten Gewicht des 2-Element-Antennenwichtungsvektors, um einen ersten Arbeitswichtungsvektor und einen zweiten Arbeitsantennenwichtungsvektor zu erzeugen,

e) 0 Anhängen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und

f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung zu erzeugen.

**7.** Programm zum Anweisen eines Computers, um ein Antennenwichtungsvektor für eine N-Element-Antennenanordnung zu erzeugen, um ein gewünschtes Antennenmuster zu bilden, das eine einzelne Strahlrichtung θ Strahl und M Nullrichtungen θ Null (1) - θ Null (M) mit (1 = < M = < N-2) aufweist, wobei das Programm das Verfahren nach Anspruch 1 ausführt.

**8.** Programm zum Anweisen eines Computers, um einen Antennenwichtungsvektor für eine N-Element-Antennenanordnung zu erzeugen, um ein gewünschtes Antennenmuster zu bilden, das M Nullrichtungen θ Null (1) - θ Null (M) mit (1 = < M = < N-1) aufweist, wobei das Programm das Verfahren nach Anspruch 6 ausführt.

**9.** Vorrichtung zur Bildung eines gewünschten Antennenmusters mit:

einer N-Element-Antennenanordnung, die N Antennenelemente aufweist, die voneinander gleichförmig beabstandet und in einer Linie angeordnet sind,

N Sendern, die mit den entsprechenden N Antennenelementen verbunden sind,

N Digital/Analog-Wandler, die jeweils einen entsprechenden Strahl der Sendedaten in ein analoges Signal wandeln, das an einen entsprechenden Sender ausgegeben wird, und

einem Signalprozessor zum Bearbeiten der Sendedaten, um N Strahlen der Sendedaten zu erzeugen, die jeweils nach den N Antennengewichten gewichtet werden,

**dadurch gekennzeichnet , dass** der Signalprozessor einen Einzel-Strahlrichtung-θ-Strahl und M Nullrichtungen θ Null (1) - θ Null (M) mit (1 = < M = < N-2) eingibt und die Schritte durchführt:

a) Erzeugen eines Arbeitsantennenwichtungsvektors für eine (N-M)-Element-Antennenanordnung, um einen Strahl in die einzelne Strahlrichtung zu bilden,

b) nacheinander Auswählen einer der M Nullrichtungen,

c) Erzeugen eines 2-Element-Antennenwichtungsvektors für eine 2-Element-Antennenanordnung, um eine Null in der ausgewählten Nullrichtung zu bilden,

d) Multiplizieren des Arbeitsantennenwichtungsvektors mit einem ersten Gewicht und einem zweiten Gewicht des 2-Element-Antennenwichtungsvektors, um einen ersten Arbeitswichtungsvektor und einen zweiten Arbeitsantennenwichtungsvektor zu erzeugen,

e) 0 Anfügen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und

f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung zu erzeugen.

**10.** Vorrichtung zur Bildung eines gewünschten Antennenmusters mit:

einer N-Element-Antennenanordnung, die N Antennenelemente aufweist, die voneinander gleichförmig beabstandet und in einer Linie angeordnet sind,
N Sendern, die mit den entsprechenden N Antennenelementen verbunden sind,
N Digital/Analog-Wandler, die jeweils einen entsprechenden Strahl der Sendedaten in ein analoges Signal wandeln, das an einen entsprechenden Sender ausgegeben wird, und
einem Signalprozessor zum Bearbeiten der Sendedaten, um N Strahlen der Sendedaten zu erzeugen, die jeweils nach den N Antennengewichten gewichtet werden,

**dadurch gekennzeichnet , dass** der Signalprozessor M Nullrichtungen θ Null (1) - θ Null (M) mit (1 = < M = < N-1) eingibt, mit den Schritten:

a) wahlweise Vorbereiten eines Arbeitsantennenwichtungsvektors für eine (N-M)-Element-Antennenanordnung,
b) nacheinander Auswählen einer der M Nullrichtungen,
c) Erzeugen eines 2-Element-Antennenwichtungsvektors für eine 2-Element-Antennenanordnung, um eine Null in der ausgewählten Nullrichtung zu bilden,
d) Multiplizieren des Arbeitsantennenwichtungsvektors mit einem ersten Gewicht und einem zweiten Gewicht des 2-Element-Antennenwichtungsvektors, um einen ersten Arbeitswichtungsvektor und einen zweiten Arbeitsantennenwichtungsvektor zu erzeugen,
e) 0 Anfügen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und
f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung zu erzeugen.

**11.** Vorrichtung zur Bildung eines gewünschten Antennenmusters mit:

einer N-Element-Antennenanordnung die N Antennenelemente aufweist, die voneinander gleichförmig beabstandet und in einer Linie angeordnet sind,
N Empfängern, die mit den entsprechenden N Antennenelementen verbunden sind, die jeweils ein entsprechendes empfangenen Signal zu erzeugen,
N Analog/Digital-Wandlern, die jeweils ein entsprechendes empfangenen Signal in einem Strahl von empfangenen Daten umwandeln, und
einem Signalprozessor zur Wichtung von N Strahlen der empfangenen Daten nach einem der entsprechenden N Antennengewichte, um empfangene Daten zu erzeugen,

**dadurch gekennzeichnet , dass** der Signalprozessor eine einzelne Strahlrichtung θ Strahl und M Nullrichtungen θ Null (1) - θ Null (M) mit (1 = < M = < N-1) eingibt und die Schritte durchführt:

a) Erzeugen eines Arbeitsantennenwichtungsvektors für eine (N-M)-Element-Antennenanordnung, um einen Strahl in der einzelnen Strahlrichtung zu bilden,
b) nacheinander Auswählen einer der M Nullrichtungen,
c) Erzeugen eines 2-Element-Antennenwichtungsvektors für eine 2-Element-Antennenanordnung, um eine Null in der ausgewählten Nullrichtung zu bilden,
d) Multiplizieren des Arbeitsantennenwichtungsvektors mit einem ersten Gewicht und einem zweiten Gewicht des 2-Element-Antennenwichtungsvektors, um einen ersten Arbeitswichtungsvektor und einen zweiten Arbeitsantennenwichtungsvektor zu erzeugen,
e) 0 Anfügen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und
f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung zu erzeugen.

**12.** Vorrichtung zur Bildung eines gewünschten Antennenmusters mit:

einer N-Element-Antennenanordnung, die N Antennenelemente aufweist, die voneinander gleichförmig beabstandet und in einer Linie angeordnet sind,
N Empfängern, die mit den entsprechenden N Antennenelementen verbunden sind, die jeweils ein entsprechendes empfangenes Signal erzeugen,
N Analog/Digital-Wandlern, die jeweils ein entsprechendes empfangenes Signal in einen Strahl von empfangenen Daten umwandeln, und
einem Signalprozessor zur Wichtung der N Strahlen der empfangenen Daten nach entsprechenden der N Antennengewichte, um empfangene Daten zu erzeugen,

**dadurch gekennzeichnet , dass** der Signalprozessor M Nullrichtungen θ Null (1) - θ Null (M) mit (1 = < M = < N-1) eingibt, mit den Schritten:

a) wahlweise Vorbereiten eines Arbeitsantennenwichtungsvektors für eine (N-M)-Element-Antennenanordnung,
b) nacheinander Auswählen einer der M Nullrichtungen,
c) Erzeugen eines 2-Element-Antennenwichtungsvektors für eine 2-Element-Antennenanordnung, um eine Null in der ausgewählten Nullrichtung zu bilden,
d) Multiplizieren des Arbeitsantennenwichtungsvektors mit einem ersten Gewicht und einem zweiten Gewicht des 2-Element-Antennenwichtungsvektors, um einen ersten Arbeitswichtungsvektor und einen zweiten Arbeitsantennenwichtungsvektor zu erzeugen,
e) 0 Anfügen an ein Ende des ersten Arbeitswichtungsvektors und an einen Anfang des zweiten Arbeitswichtungsvektors, um einen ersten erweiterten Wichtungsvektor und einen zweiten erweiterten Wichtungsvektor zu erzeugen, und Addieren des ersten erweiterten Wichtungsvektors und des zweiten erweiterten Wichtungsvektors, um einen Arbeitsantennenwichtungsvektor zu erzeugen, und
f) Wiederholen der Schritte (c) - (e) bis die M Nullrichtungen ausgewählt wurden, um einen endgültigen Arbeitsantennenwichtungsvektor als den Antennenwichtungsvektor für eine N-Element-Antennenanordnung zu erzeugen.

## Revendications

**1.** Procédé pour produire un vecteur de pondération d'antenne pour une antenne à rangée de N éléments de façon à former un modèle d'antenne indiqué ayant une direction de rayonnement unique θrayon et M directions nulles θnul (1)-θnul(M) (1=<M=<N-2), **caractérisé par** les étapes consistant à :

a) produire un vecteur de pondération d'antenne pour une antenne à rangée de (N-M) éléments de façon à former un rayonnement dans la direction de rayonnement unique ;
b) sélectionner de manière séquentielle une des directions nulles M ;
c) produire un vecteur de pondération d'antenne à 2 éléments pour une antenne à rangée de 2 éléments de façon à former un rayonnement nul dans la direction nulle sélectionnée ;
d) multiplier le vecteur de pondération d'antenne par une première valeur de pondération et par une seconde valeur de pondération du vecteur de pondération d'antenne à 2 éléments pour produire un premier vecteur de pondération fonctionnel et un second vecteur de pondération d'antenne fonctionnel ;
e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et
f) répéter les étapes (c)-(e) jusqu'à ce que les directions nulles M aient été sélectionnées, pour produire un vecteur de pondération d'antenne fonctionnel final en tant que vecteur de pondération d'antenne pour une antenne à rangée de N éléments.

**2.** Procédé selon la revendication 1, dans lequel l'étape (a) comprend l'étape consistant à calculer le vecteur de pondération d'antenne fonctionnel $W_{modèle} = (w_{rayon(1)},..., W_{rayon(N-M)})$ en utilisant les expressions suivantes :

$$\delta W_{rayon} = \exp(-j \cdot k \cdot d \cdot \sin (\theta\ rayon)\},$$

$$W_{rayon(1)} = 1,$$

et

$$W_{rayon(i)} = W_{rayon(i-1)} \cdot \delta W_{rayon} \ (i = 2, 3, ..., N\text{-}M),$$

où d est une distance entre des éléments d'antenne de l'antenne à rangée de N éléments, k est la constante de propagation d'espace libre (k=2 $\pi/\lambda$), $\lambda$ est une longueur d'onde dans un espace libre.

3. Procédé selon la revendication 2, dans lequel l'étape (c) comprend l'étape consistant à calculer le vecteur de pondération d'antenne à 2 éléments $w_{Nul(m)} = \{W_{nul\_1(m)}, W_{nul\_2(m)}\}$ en utilisant les expressions suivantes :

$$\delta W_{nul(m)} = -\exp\{-j \cdot k \cdot d \cdot \sin (\theta \ nul(m))\},$$

$$W_{nul1(m)} = 1,$$

et

$$W_{nul\_2(m)} = W_{nul\_1(m)} \cdot \delta W_{nul(m)}$$

$$= -\exp(-j \cdot k \cdot d \cdot \sin(\theta \ nul(m))\},$$

où m = 1, 2,..., M.

4. Procédé selon la revendication 3, dans lequel l'étape (d) comprend l'étape consistant à calculer le premier vecteur de pondération fonctionnel $W_{rayon1}$ et le second vecteur de pondération fonctionnel $W_{rayon2}$ en utilisant les expressions suivantes :

$$W_{rayon1} = W_{nul\_1(m)} \cdot W_{modèle} = 1 \cdot W_{modèle},$$

et

$$W_{rayon2} = W_{nul\_2(m)} \cdot W_{modèle}$$

$$= \exp\{-j \cdot k \cdot d \cdot \cos (\theta \ nul(m))\} \cdot W_{modèle},$$

5. Procédé selon la revendication 4, dans lequel l'étape (e) comprend les étapes consistant à :

ajouter 0 à l'extrémité en queue du premier vecteur de pondération fonctionnel $W_{rayon1}$ et à un en-tête du second vecteur de pondération fonctionnel $W_{rayon2}$ pour produire le premier vecteur de pondération étendu $[W_{rayon1}, 0]$ et le second vecteur de pondération étendu $[0, W_{rayon2}]$, et
faire la somme du premier vecteur de pondération étendu et du second vecteur de pondération étendu pour produire le vecteur de pondération d'antenne fonctionnel $W_{modèle} = [W_{rayon1}, 0] + [0, W_{rayon2}]$.

6. Procédé pour produire un vecteur de pondération d'antenne pour une antenne à rangée de N éléments de façon à former un modèle d'antenne indiqué ayant M directions nulles θnul(1)- θnul(M)(1=<M=<N-1), **caractérisé par** les étapes consistant à :

a) préparer de manière arbitraire un vecteur de pondération d'antenne pour une antenne à rangée de (N-M) éléments ;
b) sélectionner de manière séquentielle une des directions nulles M ;

c) produire un vecteur de pondération d'antenne à 2 éléments pour une antenne à rangée de 2 éléments pour former un rayon nul dans la direction nulle sélectionnée ;

d) multiplier le vecteur de pondération d'antenne fonctionnel par une première valeur de pondération et par une seconde valeur de pondération du vecteur de pondération d'antenne à 2 éléments pour produire un premier vecteur de pondération fonctionnel et un second vecteur de pondération d'antenne ;

e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et

f) répéter les étapes (c)-(e) jusqu'à ce que les directions nulles M aient été sélectionnées pour produire un vecteur de pondération d'antenne final en tant que vecteur de pondération d'antenne pour une antenne à rangée de N éléments.

**7.** Programme destiné à commander un ordinateur de façon à produire un vecteur de pondération d'antenne pour une antenne à rangée de N éléments de façon à former un modèle d'antenne indiqué ayant une direction de rayonnement unique θrayon et M directions nulles θnul(1)- θnul (M) (1=<M=<N-2), le programme implémentant le procédé défini dans la revendication 1.

**8.** Programme destiné à commander un ordinateur de façon à produire un vecteur de pondération d'antenne pour une antenne à rangée de N éléments de façon à former un modèle d'antenne indiqué ayant M directions nulles θnul(1)- θnul(M)(1=<M=<N-1), le programme implémentant le procédé défini dans la revendication 6.

**9.** Dispositif pour former un modèle d'antenne indiqué, comprenant :

une antenne à rangée de N éléments ayant N éléments d'antenne espacés de manière uniforme et alignés sur une ligne ;

N émetteurs connectés aux N éléments respectifs de l'antenne ;

N convertisseurs numérique-analogique, chacun convertissant un flot correspondant de données de transmission en un signal analogique qui est fourni en sortie à un émetteur correspondant ; et

Un processeur de signal pour traiter les données de transmission de façon à produire N flots de données de transmission qui sont pondérées selon N valeurs de pondération d'antenne, respectivement,

**caractérisé en ce que** le processeur de signal fournit en entrée une direction de rayonnement unique θrayon et M directions nulles θnul(1)-θnul (M)(1=<M=<N-2), et exécute les étapes consistant à :

a) produire un vecteur de pondération d'antenne fonctionnel pour une antenne à rangée de (N-M) éléments pour former un rayonnement dans la direction de rayonnement unique ;

b) sélectionner de manière séquentielle une des directions nulles M ;

c) produire un vecteur de pondération d'antenne à 2 éléments pour une antenne à rangée de 2 éléments de façon à former un rayon nul dans la direction nulle sélectionnée ;

d) multiplier le vecteur de pondération d'antenne par une première valeur de pondération et par une seconde valeur de pondération du vecteur de pondération d'antenne à 2 éléments pour produire un premier vecteur de pondération fonctionnel et un second vecteur de pondération d'antenne fonctionnel ;

e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et

f) répéter les étapes (c)-(e) jusqu'à ce que les directions nulles M aient été sélectionnées, pour produire un vecteur de pondération d'antenne fonctionnel final en tant que vecteur de pondération d'antenne pour une antenne à rangée de N éléments.

**10.** Dispositif pour former un modèle d'antenne indiqué, comprenant :

une antenne à rangée de N éléments ayant N éléments d'antenne espacés de manière uniforme et alignés sur une ligne ;

N émetteurs connectés aux N éléments respectifs de l'antenne ;

N convertisseurs numérique-analogique, chacun convertissant un flot correspondant de données de transmission en un signal analogique qui est fourni en sortie à un émetteur correspondant ; et

Un processeur de signal pour traiter les données de transmission de façon à produire N flots de données de transmission qui sont pondérées selon N valeurs de pondération d'antenne, respectivement,

**caractérisé en ce que** le processeur de signal fournit en entrée M directions nulles θnul(1)-θnul (M) (1=<M=<N-1), et comprend les étapes consistant à :

a) préparer de manière arbitraire un vecteur de pondération d'antenne fonctionnel pour une antenne à rangée de (N-M) éléments ;

b) sélectionner de manière séquentielle une des directions nulles M ;

c) produire un vecteur de pondération d'antenne à 2 éléments pour une antenne à rangée de 2 éléments de façon à former un rayon nul dans la direction nulle sélectionnée ;

d) multiplier le vecteur de pondération d'antenne par une première valeur de pondération et par une seconde valeur de pondération du vecteur de pondération d'antenne à 2 éléments pour produire un premier vecteur de pondération fonctionnel et un second vecteur de pondération d'antenne fonctionnel ;

e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et

f) répéter les étapes (c)-(e) jusqu'à ce que les directions nulles M aient été sélectionnées, pour produire un vecteur de pondération d'antenne fonctionnel final en tant que vecteur de pondération d'antenne pour une antenne à rangée de N éléments.

**11.** Dispositif pour former un modèle d'antenne indiqué, comprenant :

une antenne à rangée de N éléments ayant N éléments d'antenne espacés de manière uniforme et alignés sur une ligne ;

N récepteurs connectés aux N éléments respectifs de l'antenne, chacun produisant un signal de réception correspondant ;

N convertisseurs analogique-numérique, chacun convertissant signal de réception correspondant en un flot de données reçues ; et

Un processeur de signal pour pondérer N flots de données reçues selon les valeurs respectives de pondération d'antenne N pour produire des données reçues,

**caractérisé en ce que** le processeur de signal fournit en entrée une direction de rayonnement unique θrayon et M directions nulles θnul(1)-θnul (M)(1=<M=<N-2), et exécute les étapes consistant à :

a) produire un vecteur de pondération d'antenne fonctionnel pour une antenne à rangée de (N-M) éléments pour former un rayonnement dans la direction de rayonnement unique ;

b) sélectionner de manière séquentielle une des directions nulles M ;

c) produire un vecteur de pondération d'antenne à 2 éléments pour une antenne à rangée de 2 éléments pour former un rayon nul dans la direction nulle sélectionnée ;

d) multiplier le vecteur de pondération d'antenne par une première valeur de pondération et par une seconde valeur de pondération du vecteur de pondération d'antenne à 2 éléments pour produire un premier vecteur de pondération fonctionnel et un second vecteur de pondération d'antenne fonctionnel ;

e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et

f) répéter les étapes (c)-(e) jusqu'à ce que les directions nulles M aient été sélectionnées, pour produire un vecteur de pondération d'antenne fonctionnel final en tant que vecteur de pondération d'antenne pour une antenne à rangée de N éléments.

**12.** Dispositif pour former un modèle d'antenne indiqué, comprenant :

une antenne à rangée de N éléments ayant N éléments d'antenne espacés de manière uniforme et alignés sur une ligne ;

N récepteurs connectés aux N éléments respectifs de l'antenne, chacun produisant un signal de réception correspondant ;

N convertisseurs analogique-numérique, chacun convertissant signal de réception correspondant en un flot de données reçues ; et

Un processeur de signal pour pondérer N flots de données reçues selon les valeurs respectives de pondération d'antenne N pour produire des données reçues,

**caractérisé en ce que** le processeur de signal fournit en entrée M directions nulles θnul(1)-θnul (M) (1=<M=<N-1), et exécute les étapes consistant à :

a) préparer de manière arbitraire un vecteur de pondération d'antenne fonctionnel pour une antenne à rangée de (N-M) éléments ;

b) sélectionner de manière séquentielle une des directions nulles M ;

c) produire un vecteur de pondération d'antenne à 2 éléments pour une antenne à rangée de 2 éléments pour former un rayon nul dans la direction nulle sélectionnée ;

d) multiplier le vecteur de pondération d'antenne par une première valeur de pondération et par une seconde valeur de pondération du vecteur de pondération d'antenne à 2 éléments pour produire un premier vecteur de pondération fonctionnel et un second vecteur de pondération d'antenne fonctionnel ;

e) ajouter 0 à une extrémité en queue du premier vecteur de pondération fonctionnel et à un en-tête du second vecteur de pondération fonctionnel pour produire un premier vecteur de pondération étendu et un second vecteur de pondération étendu, et faire la somme du premier vecteur de pondération étendu et du second vecteur de pondération étendu pour produire un vecteur de pondération d'antenne fonctionnel ; et

f) répéter les étapes (c)-(e) jusqu'à ce que les directions nulles M aient été sélectionnées, pour produire un vecteur de pondération d'antenne fonctionnel final en tant que vecteur de pondération d'antenne pour une antenne à rangée de N éléments.

# FIG.1 (PRIOR ART)

START

DESIGNATE NULL AND BEAM FORMING DIRECTIONS:

$\theta$ beam, $\theta$ null(1),$\cdots$, $\theta$ null(M)

GENERATING STEERING VECTORS
IN NULL AND BEAM FORMING DIRECTIONS:
Abeam,Anull1,$\cdots$,AnullM
Axxx={axxx(1),axxx(2),$\cdots$,axxx(M)}

COMBINE STEERING VECTORS:
Asum=Abeam+Anull1+$\cdots$+AnullM

CALCULATE COVARIANCE MATRIX $R_{AA}$:
$R_{AA}$=Asum $\cdot$ Asum$^H$

CALCULATE OPTIMUM WEIGHT Wbeam:
Wbeam=$R^{-1}_{AA}$ $\cdot$ Abeam

END

# FIG.2

**1.1** **2.1** **3.1**

Tx D/A

**SIGNAL PROCESSOR** **4** **9.1**

**9.2**

**9.3**

Tx D/A

Tx D/A

TRANSMISSION DATA

**1.N** **2.N** **3.N** **9.N**

Tx D/A

N ANTENNA WEIGHTS:
Wbeam(1)···Wbeam(N)

**5**

ANTENNA WEIGHT CALCULATOR

BEAM DIRECTION
$\theta$beam

NULL DIRECTIONS
$\theta$null(1),···,$\theta$null(M)

# FIG.3

```
          ┌─────────────┐
          │    START    │
          └─────────────┘
                 │
                 ▼
┌─────────────────────────────────────┐
│ INPUT NULL AND BEAM FORMING          │ ─── S101
│ DIRECTIONS:                          │
│         θ beam,                      │
│   θ null(1),···, θ null(M)           │
└─────────────────────────────────────┘
                 │
                 ▼
┌─────────────────────────────────────┐
│ CALCULATE ANTENNA WEIGHTS OF         │
│ (N-M)- ELEMENT ARRAY ANTENNA         │ ─── S102
│ HAVING BEAM DIRECTION θ beam:        │
│   Wbeam=[wbeam(1),···,wbeam(N-M)]    │
└─────────────────────────────────────┘
                 │
                 ▼
┌─────────────────────────────────────┐
│         Wpattern = Wbeam             │ ─── S103
└─────────────────────────────────────┘
                 │
                 ▼
┌─────────────────────────────────────┐
│              m = 1                   │ ─── S104
└─────────────────────────────────────┘
                 │
                 ▼
┌─────────────────────────────────────┐
│ CALCULATE ANTENNA WEIGHTS OF         │
│ TWO -ELEMENT ARRAY ANTENNA           │ ─── S105
│ HAVING NULL DIRECTION θ null(m):     │
│   Wnull(m)=[1,Wnull_2(m)]            │
└─────────────────────────────────────┘
                 │
                 ▼
┌─────────────────────────────────────┐
│   Wbeam1=1·Wpattern                  │ ─── S106
│   Wbeam2=wnull_2(m)·Wpattern         │
└─────────────────────────────────────┘
                 │
                 ▼
┌─────────────────────────────────────┐
│ Wpattern=[Wbeam1,0]+[0,Wbeam2]       │ ─── S107
└─────────────────────────────────────┘
                 │
                 ▼
┌─────────────────────────────────────┐
│            m = m+1                   │ ─── S108
└─────────────────────────────────────┘
                 │
                 ▼
    S109 ──  ◇ m = M ◇  ── NO
                 │
                YES
                 │
                 ▼
          ┌─────────────┐
          │     END     │
          └─────────────┘
```

# FIG.4

(a) Wbeam0 ○ ○ ○ ——→ 3-ELEMENT ARRAY ANTENNA $\theta$beam

(b)
xWbeam1(1) ○ ○ ○
\+ \+
xWbeam2(1) ○ ○ ○
↓ ↓ ↓ ↓
Wpattern(1) ○ ○ ○ ○ ——→ 4-ELEMENT ARRAY ANTENNA $\theta$beam,$\theta$null(1)

(c)
xWbeam1(2) ○ ○ ○ ○
\+ \+ \+
xWbeam2(2) ○ ○ ○ ○
↓ ↓ ↓ ↓ ↓
Wpattern(2) ○ ○ ○ ○ ○ ——→ 5-ELEMENT ARRAY ANTENNA $\theta$beam,$\theta$null(1) ,$\theta$null(2)

(d)
xWbeam1(3) ○ ○ ○ ○ ○
\+ \+ \+ \+
xWbeam2(3) ○ ○ ○ ○ ○
↓ ↓ ↓ ↓ ↓ ↓
Wpattern(3) ○ ○ ○ ○ ○ ○ ——→ 6-ELEMENT ARRAY ANTENNA $\theta$beam,$\theta$null(1) $\theta$null(2),$\theta$null(3)

# FIG.5A

beam

3-ELEMENT ARRAY ANTENNA

# FIG.5C

null2

5-ELEMENT ARRAY ANTENNA

# FIG.5B

null1

4-ELEMENT ARRAY ANTENNA

# FIG.5D

null3

6-ELEMENT ARRAY ANTENNA

# FIG.6

```
                    ┌─────────────┐
                    │    START    │
                    └─────────────┘
                           │
                           ▼
        ┌──────────────────────────────────┐
        │  INPUT NULL AND FORMING          │        S201
        │  DIRECTIONS:                     │
        │    θ null(1),···, θ null(M)      │
        └──────────────────────────────────┘
                           │
                           ▼
        ┌──────────────────────────────────┐
        │  PROVIDE ARBITRARY ANTENNA       │
        │  WEIGHTS FOR  (N-M)- ELEMENT     │        S202
        │  ARRAY- ANTENNA:                 │
        │  Wbeam=[wbeam(1),···,wbeam(N-M)] │
        └──────────────────────────────────┘
                           │
                           ▼
        ┌──────────────────────────────────┐        S203
        │       Wpattern = Wbeam           │
        └──────────────────────────────────┘
                           │
                           ▼
        ┌──────────────────────────────────┐        S204
        │              m = 1               │
        └──────────────────────────────────┘
                           │
                           ▼
        ┌──────────────────────────────────┐
        │  CALCULATE ANTENNA WEIGHTS OF    │
        │  TWO -ELEMENT ARRAY ANTENNA      │        S205
        │  HAVING NULL DIRECTION  θ null(m) : │
        │    Wnull(m)=[1,Wnull_2(m)]       │
        └──────────────────────────────────┘
                           │
                           ▼
        ┌──────────────────────────────────┐
        │  Wbeam1=1·Wpattern               │        S206
        │  Wbeam2=Wnull_2(m)·Wpattern      │
        └──────────────────────────────────┘
                           │
                           ▼
        ┌──────────────────────────────────┐        S207
        │  Wpattern=[Wbeam1,0]+[0,Wbeam2]  │
        └──────────────────────────────────┘
                           │
                           ▼
        ┌──────────────────────────────────┐        S208
        │            m = m+1               │
        └──────────────────────────────────┘
                           │
    S209                   ▼
        ◇───────────────────────────────────◇    NO
        ◇              m = M                ◇──────┐
        ◇───────────────────────────────────◇     │
                      YES │                        │
                          ▼                        │
                    ┌─────────────┐                │
                    │     END     │                │
                    └─────────────┘                │
```

# FIG.7

SIGNAL PROCESSOR 8

1.1  6.1  7.1  9.1

Rx  A/D

Rx  A/D

Rx  A/D

1.N  6.N  7.N  9.N

Rx  A/D

$\Sigma$

10

→ RECEIVED DATA

ANTENNA WEIGHT CALCULATOR

5

← BEAM DIRECTION $\theta$beam

← NULL DIRECTIONS $\theta$null(1),···,$\theta$null(M)